# EUROPÄISCHE PATENTSCHRIFT

(11) **EP 3 382 833 B1**
(45) Veröffentlichungstag und Bekanntmachung des Hinweises auf die Patenterteilung: **16.12.2020**
(21) Anmeldenummer: 17163916.4
(22) Anmeldetag: 30.03.2017
(51) Int. Cl.: H02G 3/08, H02G 3/10, B25B 15/00, B25B 23/00, B25G 1/10, H04M 1/725, H02G 3/12, H04M 1/02

(54) **MONTAGEBAUGRUPPE FÜR EIN MODULARES MONTAGESYSTEM, WIE EIN SYSTEM ZUR TÜRKOMMUNIKATION UND GEBÄUDEELEKTROINSTALLATION UND MONTAGEWERKZEUG FÜR EINE DERARTIGE MONTAGEBAUGRUPPE**
MOUNTING ASSEMBLY FOR A MODULAR MOUNTING SYSTEM, SUCH AS A SYSTEM FOR DOOR COMMUNICATION AND BUILDING ELECTRONIC INSTALLATION AND MOUNTING TOOL FOR SUCH A MOUNTING ASSEMBLY
MODULE DE MONTAGE POUR UN SYSTÈME DE MONTAGE MODULAIRE COMME UN SYSTÈME DE COMMUNICATION DE PORTE ET INSTALLATION ÉLECTRONIQUE DE BÂTIMENT ET OUTIL DE MONTAGE POUR UN TEL MODULE DE MONTAGE

(43) Veröffentlichungstag der Anmeldung: 03.10.2018
(73) Patentinhaber: GIRA GIERSIEPEN GmbH & Co. KG, 42477 Radevormwald (DE)
(72) Erfinder: BUDWEG, Mario, 42499 Hückeswagen (DE); TÖDTMANN, Michael, 42855 Remscheid (DE)
(74) Vertreter: Patent- und Rechtsanwälte Dr. Solf & Zapf

(56) Entgegenhaltungen:
- EP-A1- 0 060 395
- EP-A1- 2 644 063
- EP-A1- 2 924 959
- EP-A1- 3 012 932
- EP-A2- 2 552 085
- WO-A1-2005/029830
- DE-A1- 4 228 940
- FR-A5- 2 185 183
- GB-A- 570 682

## Beschreibung

Die vorliegende Erfindung betrifft eine Montagebaugruppe nach Anspruch 1. Des Weiteren betrifft die vorliegende Erfindung ein Montagewerkzeug für eine derartige Montagebaugruppe nach Anspruch 15. Montagebaugruppen der genannten Art sind beispielsweise aus der EP 2 644 063 A1 und der EP 2 645 501 A1 bekannt.

Die EP 2 644 063 A1 beschreibt ein modulares Montagesystem, insbesondere ein System zur Türkommunikation, umfassend einen Träger für erste und zweite Funktionseinheiten, wobei die Funktionseinheiten jeweils in einer Ausnehmung des Trägers in einem aus Spalten und/oder Reihen bestehenden Raster festlegbar sind. Die erste Funktionseinheit und die zweite Funktionseinheit sind dabei maßlich unterschiedlich genormt, wobei für den Träger ein Raster mit quadratischen Einheitsflächen vorgegeben ist, deren jeweilige Grundseite ein Rastermaß aufweist, nach welchem die jeweilige Länge und/oder die jeweilige Breite der Ausnehmung und/oder bei Vorhandensein von zwei oder mehr Ausnehmungen der jeweilige Mittenabstand zwischen den Ausnehmungen als ganzzahliges Produkt des Rastermaßes dimensioniert sind. Das Rastermaß ist dabei als eine Größe festgelegt, durch die sowohl eine charakteristische Längen- oder Breitenabmessung, die nicht kleiner ist als eine genormte minimal zulässige Abmessung der einen Funktionseinheit, als auch ein genormter Montageabstand der anderen Funktionseinheit ganzzahlig teilbar ist.

Ein derartiges System der Anmelderin ist für eine Türstation wegen des Grundmaßes seiner Funktionseinheiten von 106,5 mm x 106,5 mm auch unter dem Namen Gira System 106 bekannt. Dieses System ist durch seinen modularen Aufbau vorteilhafterweise individuell an die verschiedensten Gegebenheiten und Anforderungen anpassbar. Durch Einsatz von Ruftasten-, Sprach- und Kameramodulen bis hin zu Info- und Blindmodulen sowie zu Briefkastenmodulen als Funktionseinheiten können alle gewünschten Funktionen in einem stimmigen Gesamtbild zusammengesetzt werden. Im Dunkeln sorgen die hinterleuchteten Ruftasten mit Beschriftungsfeld für gute Lesbarkeit und eine ansprechende Erscheinung. Das System 106 kann in Ein- und Mehrfamilienhäusern, aber auch in Bürogebäuden, Industrieobjekten und Hotels eingesetzt werden. Der modulare Aufbau ermöglicht es, das System in Größe, Design und Funktionalität individuell an den jeweiligen Bedarf anzupassen. Erweiterungen und Änderungen sind durch Modul-Austausch jederzeit einfach möglich. Das System kann parallel zum Baufortschritt in verschiedenen Stufen installiert werden. Wenngleich die EP 2 644 063 A1 in besonderer Ausführungsform ein Unterputz-Gehäuse beschreibt, in dem der Träger für die Funktionseinheiten auf nicht näher beschriebene Weise festlegbar ist, so ist es vorteilhafterweise doch möglich, beim Rohbau eines Gebäudes zunächst nur den unteren Teil eines Aufputz-Gehäuses zu montieren, wobei Leitungen und Module dann hinzugefügt werden können, wenn sie gebraucht werden.

Die EP 2 645 501 A1 bezieht sich primär auf ein Systemmodul für die Gebäudeelektroinstallation und Türkommunikation, bestehend aus einem Modulunterteil und einem mit diesem lösbar verbundenen Funktionsoberteil, wobei das Modulunterteil zum Befestigen an einem Systemträger dient. Das Modulunterteil weist ein quaderförmiges Bodenteil auf, in dem ein Schaltungsträger mit seiner elektronischen Schaltung aufgenommen ist, wobei der Schaltungsträger einseitig zwei Mehrfachkontakte für einen Anschluss einer Busleitung aufweist und die Mehrfachkontakte derart elektrisch belegt sind, dass sie sowohl Kontaktstellen für den Eingang als auch den Ausgang für eine elektrische Signalverarbeitung und eine Spannungsversorgung bilden, und wobei die Mehrfachkontakte über Öffnungen im Bodenteil zugänglich sind. Die Module können einschließlich des Funktionsträgers insbesondere in einem für eine Unterputz-Montage (UP-Installation) geeigneten Unterputzgehäuse montiert werden. Dem Dokument ist dabei auch zu entnehmen, dass eine Dichtung zwischen dem Unterputzgehäuse und einem Rahmenabschnitt des Systemträgers angeordnet sein kann. Solche Systemmodule sind - wie in der EP 2 645 501 A1 ebenfalls beschrieben - auch oft so gestaltet, dass sie in ein Aufputzgehäuse einsetzbar sind, wobei im Rahmen einer Aufputz-Montage (AP-Installation) die Befestigung auf einer Wandfläche erfolgt. Dazu wird das Gehäuse - wie bereits oben für das Gira System 106 erläutert - mit Hilfe geeigneter Mittel auf der Wand fixiert, wobei äußere Anschlussleitungen, z. B. eines Kabels, durch eine Gehäuseöffnung in den Bereich des Schaltungsträgers geführt und an dessen Kontakten angeschlossen werden.

Der in der EP 2 645 501 A1 als Systemträger bezeichnete Modulträger kann in bevorzugter Ausführung an einer Seite seines Rahmens einen Verschlussriegel aufweisen, der nach einer Verschiebung mit einem Verschlussgegenstück des Gehäuses eine Formschlussverbindung ausbildet und auf diese Weise den Systemträger, insbesondere durch ein Miteinander-Verrasten, in dem Gehäuse lösbar fixiert. Dazu sind am Systemträger und am Gehäuse verschiedene Teile erforderlich, wie ein Lagersteg, ein Führungsschlitz, ein Haltefortsatz, ein Betätigungsfortsatz für ein Werkzeug sowie ein Verschlussgegenstück, das aus einem im Unterputzgehäuse angeordneten Verschlussblech besteht und eine teilweise randseitig offene Schlitzöffnung aufweist. Die auf diese Weise ausgebildete Verbindung ist vorteilhafterweise einerseits lösbar, aber andererseits auch stabil und sicher, birgt jedoch hinsichtlich des konstruktiven und montagetechnischen Aufwands noch ein Verbesserungspotential. Relevanter Stand der Technik ist noch in EP 0 060 395 A1, WO 2005/029830 A1, DE 42 28 940 A1, FR 2 185 183 A5, GB 570 682 A zu finden.

Der vorliegenden Erfindung liegt die Aufgabe zu Grunde, eine Montagebaugruppe der eingangs beschriebenen Art zu schaffen, die sich bei Wahrung der vorteilhaften Eigenschaften von einerseits Lösbarkeit und andererseits Stabilität und Sicherheit der Verbindung ihrer Bestandteile durch einen verringerten konstruktiven Aufwand und einen geringeren montagetechnischen Aufwand bei der Installation auszeichnet. Dabei umfasst die der vorliegenden Erfindung zugrunde liegende Aufgabe auch, ein geeignetes Montagewerkzeug für eine derartige Montagebaugruppe bereitzustellen. Erfindungsgemäß wird die Lösung der Aufgabe zunächst dadurch herbeigeführt, dass das Gehäuse im Bereich zweier benachbarter Ecken seiner Seitenwände oberseitig Vorsprünge aufweist, die bei der Montage von Halteelementen untergriffen werden, die im Bereich von zwei benachbarten Ecken der Seitenwände des Modulträgers angeordnet sind und die zusammen mit den Halteelementen und zusammen mit der zwischen den Halteelementen liegenden Seitenwand des Modulträgers ein Gelenk bilden, um das der Modulträger bei seiner Montage verschwenkbar ist, wobei der Modulträger in einer Seitenwand eine Aufnahmeöffnung zum Eingriff einer Befestigungsschraube aufweist, die eine Durchgangsbohrung durchgreift, welche sich in der neben der Seitenwand des Modulträgers liegenden Seitenwand des Gehäuses befindet.

Die erfindungsgemäße Ausgestaltung der Montagebaugruppe vereinfacht die Montage erheblich, weil der Modulträger zur Montage im Gehäuse einfach nur mit seinen, für die Verriegelung vorgesehenen Halteelementen unter die Vorsprünge des Gehäuses positioniert zu werden braucht und dann durch ein Verschwenken in dem Gelenk, das durch die Vorsprünge, die Halteelemente und die zwischen den Halteelementen liegende Seitenwand gebildet ist, in seine Montagelage abgesenkt werden kann, in der er anschließend unter Einsatz eines erfindungsgemäßen Montagewerkzeugs, mittels der Befestigungsschraube in Lage und Position verriegelt wird.

Als besonders vorteilhaft ist dabei außerdem die Möglichkeit einer toleranzunempfindlichen Positionierung des Modulträgers im Gehäuse hervorzuheben, insbesondere im Hinblick auf eine Dichtung, die in bevorzugter Ausführung unter dem Modulträger im Gehäuse angeordnet sein kann, wobei solchermaßen über die gesamte Dichtung hinweg ein nahezu konstanter Dichtungsdruck gewährleistet werden kann.

Was das Montagewerkzeug betrifft, so wird die Lösung der der Erfindung zugrunde liegenden Aufgabe durch ein Montagewerkzeug herbeigeführt, welches einen Griff, einen flexiblen Schaft und einen Kopf aufweist, wobei in dem Kopf eine Aufnahme für ein Werkzeug-Bit ausgebildet ist und wobei der Griff, der Schaft und der Kopf einstückig aus einem Kunststoff hergestellt sind. Das erfindungsgemäße Montagewerkzeug ist dabei insbesondere zum Eindrehen der erfindungsgemäß vorgesehenen Befestigungsschraube durch die Durchgangsbohrung im Gehäuse in die Aufnahmeöffnung des Modulträgers bestimmt.

Der Vorteil des Einsatzes dieses Werkzeugs besteht dabei insbesondere darin, dass es an schwer zugänglichen Stellen, z. B. sehr nahe an einer Wand, eingesetzt werden kann, also an Stellen, die mit einem handelsüblichen Werkzeug - ohne Beeinträchtigung bzw. Beschädigung z. B. einer Fassade - nicht erreichbar sind.

Im Vergleich mit herkömmlichen Bithaltern oder Schraubendrehern, bei denen Griff, Schaft und Kopf aus mehreren Teilen bestehen, die aus unterschiedlichen Werkstoffen gefertigt sind, trägt das erfindungsgemäße Werkzeug in synergistischer Weise zur Senkung des Montageaufwands und Verbesserung der Montagefreundlichkeit der erfindungsgemäßen Montagebaugruppe bei. Dies ist insbesondere auch unter dem Gesichtspunkt zu sehen, dass bei bekannten Werkzeugen, wenn sie einen flexiblen Schaft aufweisen, dieser üblicherweise in vergleichsweise aufwändigerer Ausführung als eine drahtgeflochtene flexible Welle ausgeführt ist.

Des Weiteren ist es im Rahmen der erfindungsgemäßen Ausführung des Montagewerkzeugs auf einfache und wenig aufwändige Weise möglich, durch die Festlegung der Größe des Kern-Durchmessers des Schaftes und durch gegebenenfalls auf dem Umfang des Schaftes vorgesehene Längs- und/oder Querrippen, dem Schaft des Werkzeugs ein Torsionswiderstandsmoment zu verleihen, das kleiner ist als ein vorbestimmtes Grenz-Drehmoment, welches insbesondere in der Aufnahme für das Werkzeug-Bit und/oder an der Wirkungsstelle des Werkzeug-Bits an einer/der Befestigungsschraube und/oder am Modulträger zu einer Zerstörung führen würde. Das Torsionswiderstandsmoment des Schaftes kann dabei vorzugsweise nicht größer sein als 1 Nm. Bei einem zu großen, bei der Montage aufgebrachten Drehmoment tordiert der Schaft und ein überhöhtes Drehmoment kann nicht aufgebracht werden.

Aufgrund seiner vergleichsweise unter Einsatz eines Spritzgussverfahrens aufwandsarmen Fertigung kann das erfindungsgemäße Werkzeug mit Vorteil als Massenartikel produziert und zusammen mit der erfindungsgemäßen Montagebaugruppe als Montageset zum Aufbau eines modularen Montagesystems, wie eines Systems zur Türkommunikation und Gebäudeelektroinstallation, ausgeliefert werden.

Weitere vorteilhafte Ausgestaltungsmerkmale der Erfindung sind in den Unteransprüchen sowie der folgenden Beschreibung enthalten.

Anhand von in der Zeichnung dargestellten, bevorzugten Ausführungsbeispielen soll im Folgenden die Erfindung näher erläutert werden. Dabei zeigen:
- Fig. 1: eine Perspektivansicht eines Gehäuses einer erfindungsgemäßen Montagebaugruppe,
- Fig. 2: eine Perspektivansicht eines Modulträgers einer erfindungsgemäßen Montagebaugruppe,
- Fig. 3: eine geschnittene Perspektivansicht des in Fig. 1 dargestellten Gehäuses einer erfindungsgemäßen Montagebaugruppe unter anderem Blickwinkel als in Fig. 1,
- Fig. 4: eine Perspektivansicht einer erfindungsgemäßen Montagebaugruppe in einem Montageschritt,
- Fig. 5: eine Perspektivansicht der erfindungsgemäßen Montagebaugruppe in einem weiteren Montageschritt,
- Fig. 6: ein entlang der Längsachse der erfindungsgemäßen Montagebaugruppe geschnittenes Detail der erfindungsgemäßen Montagebaugruppe in dem weiteren Montageschritt,
- Fig. 7: eine Perspektivansicht der erfindungsgemäßen Montagebaugruppe nach ihrer Montage,
- Fig. 8 und 9: eine Perspektivansicht eines Ausschnitts aus dem Gehäuse der erfindungsgemäßen Montagebaugruppe mit einer Halteschnur, vor und nach der Montage der Halteschnur am Gehäuse,
- Fig. 10: eine Perspektivansicht eines erfindungsgemäßen Montagewerkzeuges zur Montage einer Befestigungsschraube der erfindungsgemäßen Montagebaugruppe in dem Montageschritt gemäß Fig. 6,
- Fig. 11: eine Stirnansicht auf den Kopf des in Fig. 6 und Fig. 10 dargestellten erfindungsgemäßen Montagewerkzeuges.

Zu der anschließenden Beschreibung wird ausdrücklich betont, dass die Erfindung nicht auf die Ausführungsbeispiele und dabei auch nicht auf alle oder mehrere Merkmale von beschriebenen Merkmalskombinationen beschränkt ist, vielmehr kann jedes einzelne Teilmerkmal jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels eine erfinderische Bedeutung haben.

In den Figuren der Zeichnung sind gleiche bzw. einander entsprechende Teile stets mit denselben Bezugszeichen versehen, so dass sie in der Regel auch jeweils nur einmal beschrieben werden.

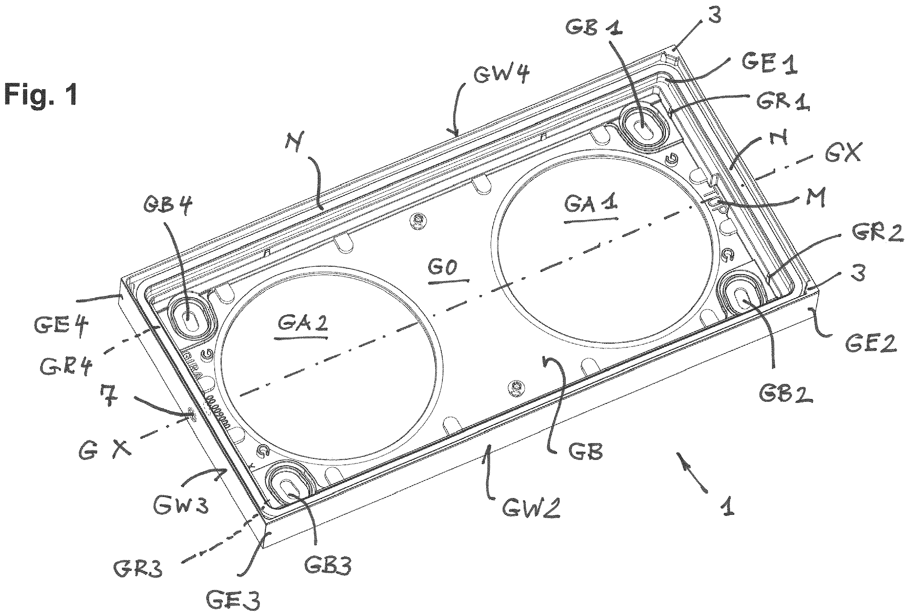

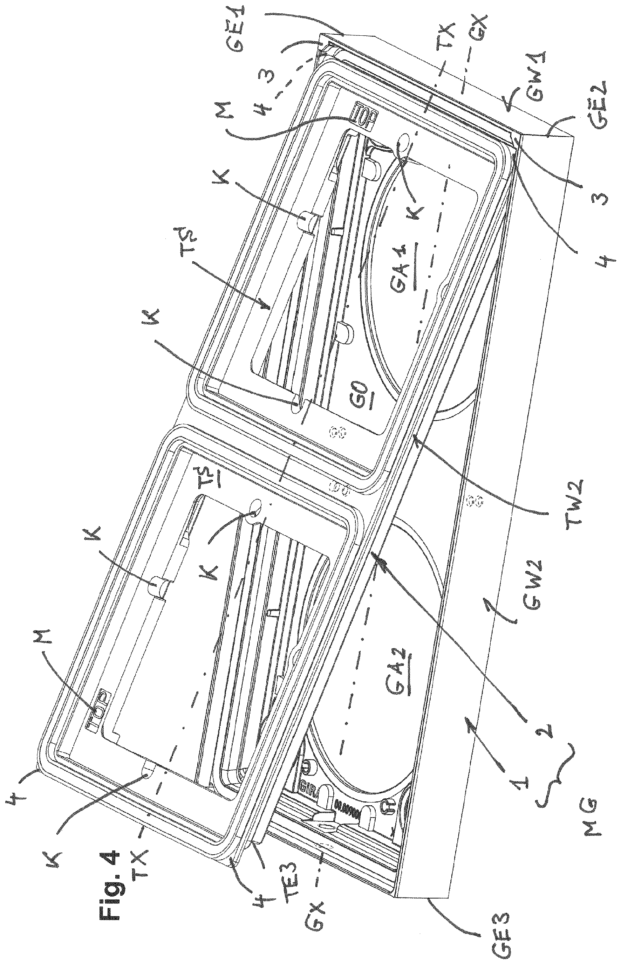

Wie zunächst aus den Einzelteildarstellungen in Fig. 1 bis 3 und aus den Gesamtdarstellungen in Fig. 4 bis 7 hervorgeht, umfasst eine erfindungsgemäße Montagebaugruppe MG mindestens einerseits ein in der Grundgestalt quaderförmiges Gehäuse 1 (Einzelteildarstellung insbesondere in Fig. 1). Dieses Gehäuse 1 weist jeweils in Ecken GE1, GE2, GE3, GE4 zusammenstoßende Seitenwände GW1, GW2, GW3, GW4 auf. Die Seitenwände GW1, GW2, GW3, GW4 umgeben eine oberseitig offene Einsatzöffnung GO des Gehäuses 1.

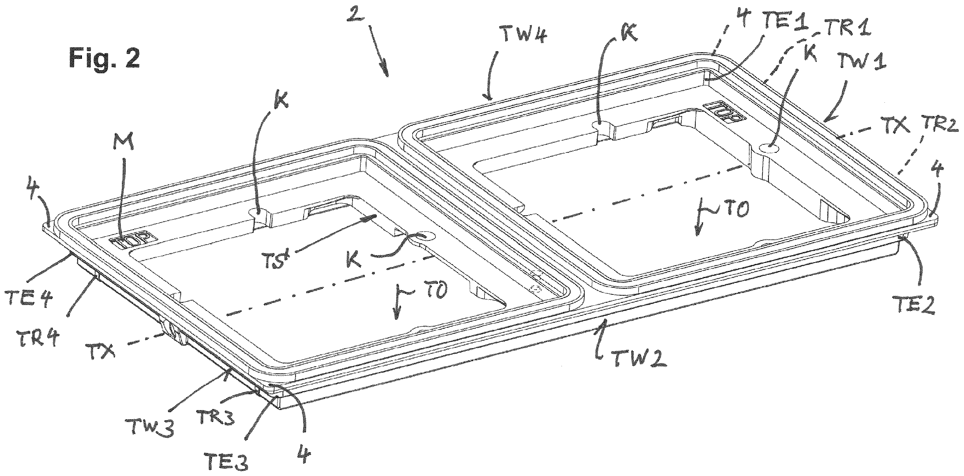

Des Weiteren umfasst eine erfindungsgemäße Montagebaugruppe MG andererseits einen in der Grundgestalt rechteckigen, in die Einsatzöffnung GO des Gehäuses 1 einsetzbaren, und in dem Gehäuse 1 befestigbaren Modulträger 2 (Einzelteildarstellung insbesondere in Fig. 2) für nicht dargestellte Funktionseinheiten eines modularen Montagesystems, wie eines Systems zur Türkommunikation und Gebäudeelektroinstallation. Der Modulträger 2 weist ebenfalls jeweils in Ecken TE1, TE2, TE3, TE4 zusammenstoßende Seitenwände TW1, TW2, TW3, TW4 auf, die eine Trägerstruktur TS für die Funktionsmodule als Ränder umgeben.

Das Gehäuse 1 und/oder der Modulträger 2 können bevorzugt aus Metall bestehen und insbesondere im Druckguss hergestellt sein.

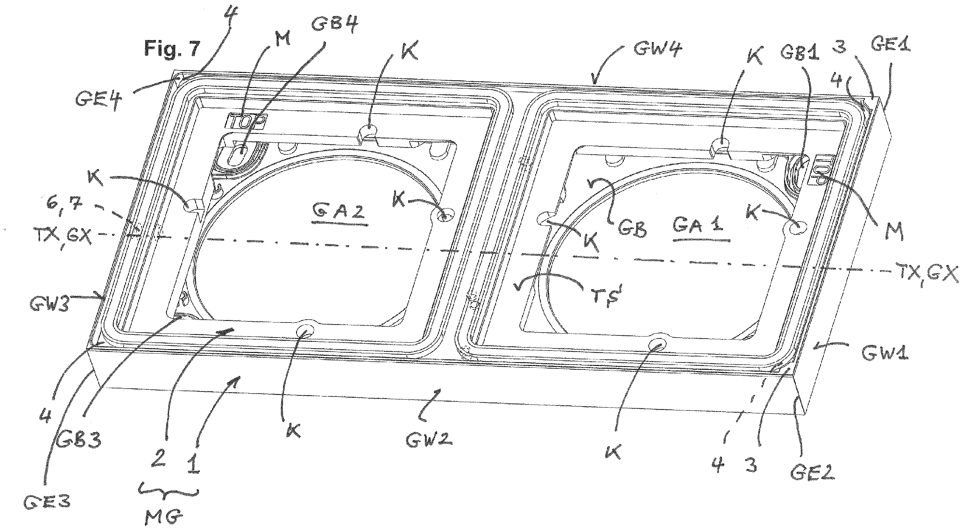

Erfindungsgemäß ist vorgesehen, dass das Gehäuse 1 im Bereich zweier benachbarter Ecken GE1, GE2 seiner Seitenwände GW1, GW2, GW3, GW4 oberseitig Vorsprünge 3 aufweist. Diese Vorsprünge 3 werden im Montagezustand (siehe Fig. 7) und auch schon während der Montage (siehe Fig. 4) von Halteelementen 4 des Modulträgers 2 untergriffen, die im Bereich von zwei benachbarten Ecken TE1, TE2 der Seitenwände TW1, TW2, TW3, TW4 des Modulträgers 2 angeordnet sind.

Die Halteelemente 4 bilden bei der Montage zusammen mit der zwischen den Halteelementen 4 liegenden Seitenwand TW1 des Modulträgers 2 ein Gelenk, um das der Modulträger 2 bei seiner Montage verschwenkbar ist, wie dies in Fig. 4 dargestellt ist.

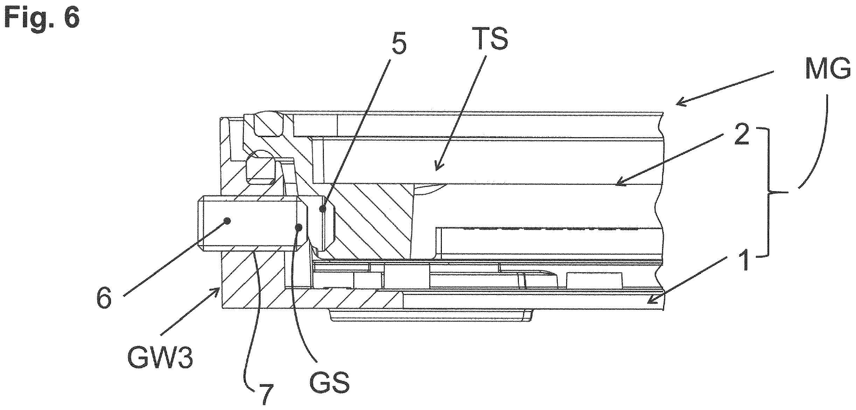

Der Modulträger 2 (Fig. 2, Fig. 6) weist in einer Seitenwand TW3 eine Aufnahmeöffnung 5 zum Eingriff einer Befestigungsschraube 6 auf, die eine Durchgangsbohrung 7 (Fig. 1, Fig. 6) durchgreift, welche sich in der neben der Seitenwand TW3 des Modulträgers 2 liegenden Seitenwand GW3 des Gehäuses 1 befindet. Die Einzelheiten dazu sind besonders gut der Schnittdarstellung in Fig. 6 zu entnehmen. Insbesondere kann die Aufnahmeöffnung 5, welche der Modulträger 2 zum Eingriff der Befestigungsschraube 6 aufweist, eine gewindelose, insbesondere sich in Eintrittsrichtung der Schraube 6 konisch verjüngende Öffnung sein, wie dies aus Fig. 6 deutlich wird. Für die Befestigungsschraube 6 kann in bevorzugter Weise vorgesehen sein, dass sie in dem Gehäuse 2 vormontiert und insbesondere dabei - wie durch eine an sich bekannte Sicherung - gegen ein Herausschrauben gesichert ist. Die Befestigungsschraube 6 kann insbesondere eine Stiftschaube sein und zur Zentrierung in der Aufnahmeöffnung 5 des Modulträgers 2 einendig eine flache und/oder verrundete konisch ausgebildete Spitze 6S sowie anderendig einen Angriff, insbesondere einen nicht genormten Innenangriff, für ein Schraubendreh-Werkzeug, insbesondere für das erfindungsgemäße Montagewerkzeug, aufweisen.

Wie in den Zeichnungen dargestellt, können das Gehäuse 1 und der Modulträger 2 jeweils zwei längere Längs-Seitenwände GW2, TW2, GW4, TW4 und zwei kürzere Quer-Seitenwände GW1, TW1, GW3, TW3 aufweisen, wobei sich die oberseitigen Vorsprünge 3 des Gehäuses 2 in zwei benachbarten Ecken GE1, GE2 einer Quer-Seitenwand GW1 und die Durchgangsbohrung 7 in der gegenüber liegenden Quer-Seitenwand GW3 des Gehäuses 1 befinden, und wobei der Modulträger 2 in einer Quer-Seitenwand TW1 die Aufnahmeöffnung 5 zum Eingriff der Befestigungsschraube 6 aufweist.

Vorzugsweise kann der Modulträger 2 in beiden Quer-Seitenwänden TW1, TW3 die Aufnahmeöffnungen 5 zum Eingriff der Befestigungsschraube 6 aufweisen, wobei an allen vier Ecken TE1, TE2, TE3, TE4 Halteelemente 4 angeordnet sind. So kann der Modulträger in zwei um 180° gegeneinander verdrehten Positionen in dem Gehäuse 1 montiert werden. Dies ist insofern von Bedeutung, als in der Trägerstruktur TS des Modulträgers 2 Aufnahmeöffnungen TO (nur in Fig. 2 mit Bezugszeichen gekennzeichnet) für Funktionsmodule mit insbesondere quadratischem Grundriss angeordnet sind, wobei die Trägerstruktur TS, insbesondere durch entsprechende Freischnitte und/oder Öffnungen, eine Kodierung K aufweist, wodurch die Funktionsmodule verdrehsicher und ausschließlich in lage- und funktionsrichtiger Anordnung in den Modulträger 2 einsetzbar sind. Hierbei soll bevorzugt vorgesehen sein, dass die lage- und funktionsrichtige Anordnung der Funktionsmodule im Modulträger 2 sowohl bei waagerechter Montage (Längsachse GX-GX des Gehäuses 1 und Längsachse TX-TX des Modulträgers 2 verlaufen waagrecht) der erfindungsgemäßen Montagebaugruppe MG, als auch bei deren senkrechter Montage (Längsachse GX-GX des Gehäuses 1 und Längsachse TX-TX des Modulträgers 2 verlaufen senkrecht) gegeben ist. Hierzu kann in der Trägerstruktur TS des Modulträgers 2 die Kodierung K so angeordnet sein, dass die Funktionsmodule in zwei gegeneinander um 90° verdrehten Positionen in den Modulträger 2 einsetzbar sind. Durch die hinsichtlich der Befestigungsschraube 6 und der Halteelemente 4 spiegelsymmetrische Ausbildung des Modulträgers 2 und durch die hinsichtlich der Vorsprünge 3 asymmetrische Ausbildung des Gehäuses 1 kann bei einer derartigen Kodierung K des Modulträgers immer die richtige Lage der nachträglich eingesetzten Funktionsmodule gewährleistet werden. Hierzu können als Montagehilfen geeignete Markierungen M im Gehäuse 1 und im Modulträger 2 vorgesehen sein. In Fig. 2 sind diese nicht deutlich erkennbar, jedoch in Fig. 1, 3, 4, und 7. Mit der Markierung "TOP" wird dabei angezeigt, welche Querseiten GW1, TW1 oder Längsseiten GW4, TW4 oben zu liegen kommen sollen. Die Verschraubung 5/6/7 sollte sich bei senkrechter Montage aus verschiedenen Gründen, wie beispielsweise des Korrosionsschutzes, vorzugsweise immer an der Unterseite der montierten erfindungsgemäßen Montagebaugruppe MG befinden. Bei einer waagerechten Montage kann sie - je nach bester Zugänglichkeit, z. B. im Hinblick auf eine daneben liegende, die Montage behindernde Gebäudewand - wahlweise rechts oder links liegen.

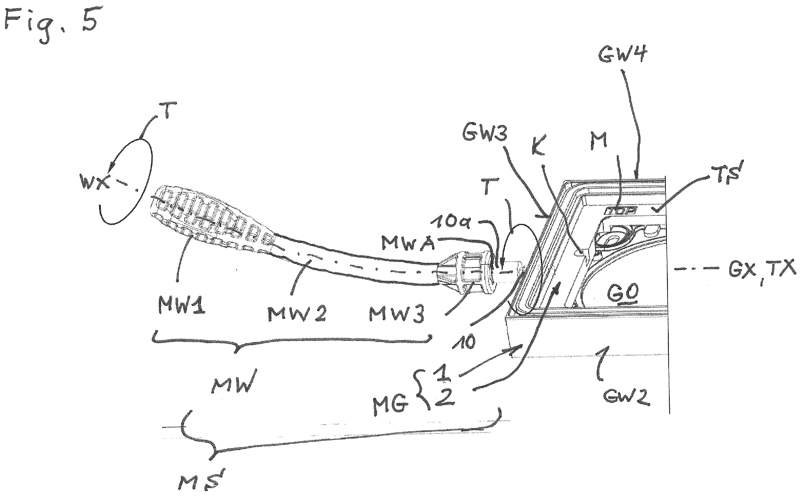

Wie bereits erwähnt, ist die Montage einer erfindungsgemäßen Montagebaugruppe MG denkbar einfach. Der Modulträger 2 wird dazu im Gehäuse 1 mit seinen, für die Verriegelung vorgesehenen Halteelementen 4 unter die Vorsprünge 3 des Gehäuses 1 positioniert, wie dies Fig. 4 zeigt, und dann durch ein Verschwenken in dem Gelenk, das durch die Vorsprünge 4, die Halteelemente 4 und die zwischen den Halteelementen 4 liegende Seitenwand TW1 gebildet ist, in seine Montagelage (Fig. 5) abgesenkt. Anschließend wird er, insbesondere unter Einsatz eines erfindungsgemäßen Montagewerkzeugs MW, mittels der Befestigungsschraube 6 in Lage und Position verriegelt. Diesen Zustand zeigt Fig. 7.

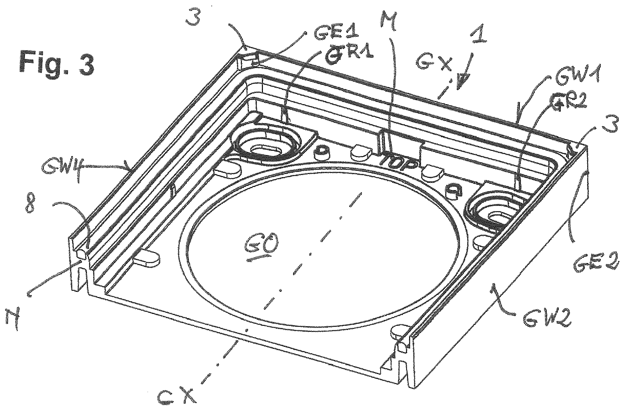

Wie ebenfalls bereits erwähnt und durch Fig. 1 und insbesondere Fig. 3 veranschaulicht, kann das Gehäuse 2 entlang seiner Seitenwände GW1, GW2, GW3, GW4 eine umlaufende Nut N zur Aufnahme einer im Montagezustand unterseitig am Modulträger 1 anliegenden Dichtung 8 aufweisen. Hierbei kann der Modulträger 2 im Gehäuse 1 toleranzunempfindlich positioniert werden, was für die Dichtung 8 über ihre gesamte Erstreckung einen nahezu konstanten Anpressdruck und daher eine hohe Dichtheit der montierten erfindungsgemäßen Montagebaugruppe MG gewährleistet.

Im Sinne der erwähnten toleranzunempfindlichen Positionierung und einer guten Einpassbarkeit des Modulträgers 1 in das Gehäuse 2 können mit Vorteil optional technische Maßnahmen ergriffen werden, die verhindern, dass die - gegebenenfalls durch ein unregelmäßiges Schrumpfen beim Guss geometrische Unregelmäßigkeiten aufweisenden - Seitenwände TW1, TW2, TW3, TW4 des Modulträgers 2 im Montagezustand vollflächig an den - möglichenfalls auch Fertigungstoleranzen aufweisenden - Seitenwänden GW1, GW2, GW3, GW4 des Gehäuses 1 anliegen. Hierzu kann insbesondere an den Quer-Seitenwänden TW1, TW3 des Modulträgers 2 außenseitig eine hervorstehende Kontur, die insbesondere durch Anlagerippen (in Fig. 2 mit den Bezugszeichen TR1, TR2, TR3 und TR4 bezeichnet), vorzugsweise jeweils zwei Anlagerippen TR1 und TR2, TR3 und TR4 an jeder Quer-Seitenwand TW1, TW3 gebildet ist, vorgesehen sein. An den Quer-Seitenwänden GW1, GW3 des Gehäuses 1 können sich dabei bevorzugt korrespondierende Anlagerippen GR1, GR2, GR3, GR4 befinden. So kommt es an den Seitenwänden GW1, GW3, TW1, TW3 mit Vorteil nur zu einer Zwei-Linien-Anlage über die Rippenlänge, und eine negative Wirkung eventuell vorhandener Unebenheiten der Oberflächen der Seitenwände GW1, GW3, TW1, TW3 wird zuverlässig ausgeschaltet.

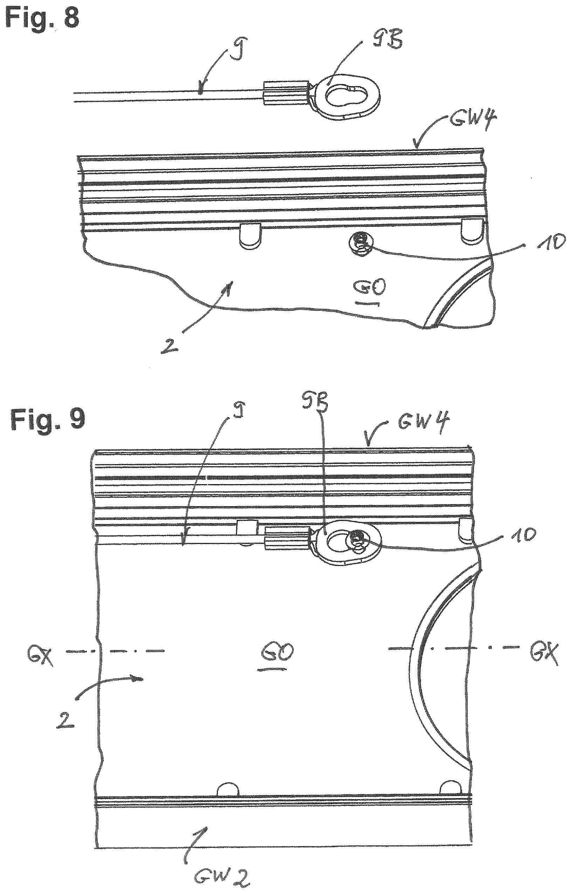

Fig. 8 und 9 zeigen einen Ausschnitt aus dem Gehäuse 1 mit einer zusätzlich bevorzugt optional der erfindungsgemäßen Montagebaugruppe MG zugehörigen Halteschnur 9, wobei diese in Fig. 8 vor der Montage und in Fig. 9 nach der Montage am Gehäuse 1 gezeigt ist. Die Halteschnur 9 kann einendig am Gehäuse 1 und anderendig am Modulträger 2 befestig werden, wobei sich an ihren Enden Befestigungselemente 9B, insbesondere Schlüsselloch-Scheiben, für jeweils eine mittels einer Kopfschraube 10 vorzunehmende Schlüsselloch-Montage, befinden. Die Befestigungselemente 9B können insbesondere angecrimpt sein. Fig. 8 und 9 zeigen nur die in das Gehäuse 1 eindrehbare Kopfschraube 10. Am Modulträger 2 kann die Befestigung auf gleiche Weise erfolgen, so dass Gehäuse 1 und Modulträger 2 über die Halteschnur 9 unverlierbar miteinander verbunden sind. Die Halteschnur kann am Gehäuse 1 und/oder am Modulträger 2 vormontiert sein.

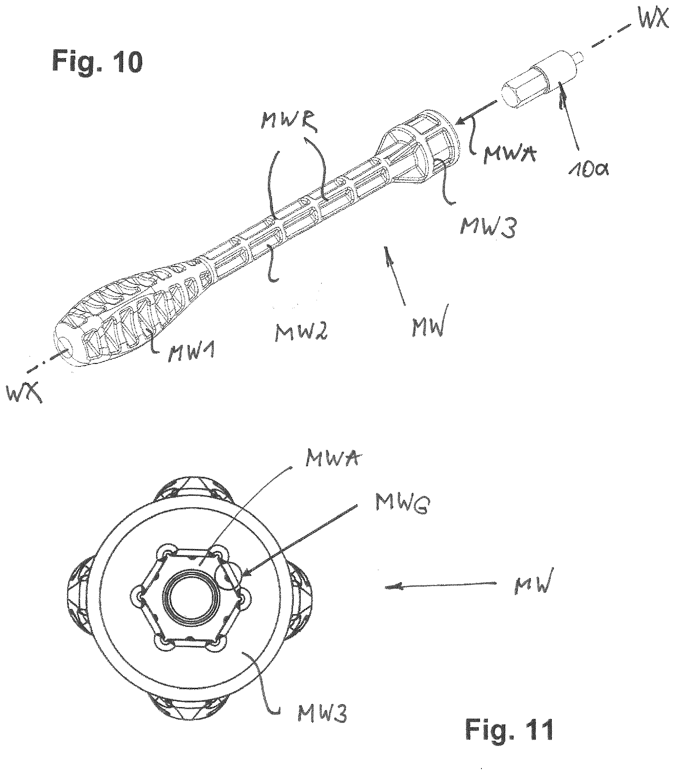

Fig. 10 und 11 beziehen sich ausschließlich auf das erfindungsgemäße Montagewerkzeug MW, welches insbesondere zur Montage der Befestigungsschraube 6 in der erfindungsgemäßen Montagebaugruppe MG einsetzbar ist, wie dies Fig. 6 zeigt. Das erfindungsgemäße Montagewerkzeug MW weist einen Griff MW1, einen flexiblen Schaft MW2 und einen Kopf MW3 auf. In dem Kopf MW3 ist eine Aufnahme MWA für ein Werkzeug-Bit 10a ausgebildet. Der Griff MW1, der Schaft MW2 und der Kopf MW3 sind einstückig aus einem Kunststoff hergestellt.

Die Aufnahme MWA für das Werkzeug-Bit 10a weist mit Vorteil eine Klemmgeometrie MWG, wie beispielsweise eine unter Federspannung stehende Kugel, auf, durch die das Werkzeug-Bit 10a nach einem Einstecken in die Aufnahme MWA im Kopf MW3 gehalten ist, so dass ein Herausfallen des Werkzeug-Bits 10a aus der Aufnahme MWA verhindert wird. Die Aufnahme MWA ist dabei derart gestaltet, dass ein Bit mit handelsüblichem Sechskant-Antrieb kann in den Kopf eingesteckt werden

Der Schaft MW2 des erfindungsgemäßen Montagewerkzeugs MW kann in bevorzugter Ausführung ein Torsionswiderstandsmoment aufweisen, das kleiner ist als ein vorbestimmtes Grenz-Drehmoment, welches insbesondere in der Aufnahme MWA für das Werkzeug-Bit 10a und/oder an der Wirkungsstelle des Werkzeug-Bits 10a an der Befestigungsschraube 6 und/oder am Modulträger 2 zu einer Zerstörung führt, wobei das Torsionswiderstandsmoment des Schaftes MW2 vorzugsweise nicht größer sein kann als 1 Nm. Durch die Dimensionierung der Größe eines (nicht bezeichneten) Kern-Durchmessers des Schaftes MW2 und durch gegebenenfalls auf dem Umfang des Schaftes MW2 vorgesehene Längs- und/oder Querrippen MWR kann ein solches Torsionswiderstandsmoment in gewünschter Weise konstruktiv eingestellt werden. Ein zur Montage aufgebrachtes Torsionsmoment (Pfeile T in Fig. 6) bleibt mit Vorteil immer kleiner als das Grenzdrehmoment.

Wie insbesondere Fig. 6 veranschaulicht, besteht der Vorteil des Einsatzes des erfindungsgemäßen Werkzeugs MW insbesondere darin, dass es aufgrund seiner insbesondere im Bereich des Schaftes MW2 federelastisch durchbiegbaren Längsachse WX-WX an schwer zugänglichen Stellen eingesetzt werden kann, wobei es jedoch gleichzeitig in aufwandsarmer Weise herstellbar ist. Nach einem Entfernen des Montagewerkzeugs MW von der Montagebaugruppe MG geht der Schaft MW2 aufgrund der federelastischen Eigenschaften des Kunststoffs in seine ursprüngliche Lage zurück. Über seine geometrische Gestaltung, insbesondere über seine Länge und sein durch Querschnittsgröße und -form bestimmtes Flächenträgheitsmoment, kann der Schaft MW2 so ausgelegt werden, dass er die erforderliche Flexibilität aufweist und den auftretenden Biegebelastungen standhält. Das Flächenträgheitsmoment des Schaftes MW2 kann ebenfalls über die Dimensionierung der Größe seines Kern-Durchmessers und durch gegebenenfalls auf seinem Umfang vorgesehene Längs- und/oder Querrippen MWR eingestellt werden. Hierbei ist zu beachten, dass im Anwendungsfall des erfindungsgemäßen Montagewerkzeugs MW ein mehrachsiger Spannungszustand vorliegt.

Die erfindungsgemäße Montagebaugruppe MG und das erfindungsgemäße Montagewerkzeug MW können mit Vorteil zum Aufbau eines modularen Montagesystems gemeinsam - als ein Montageset MS - vertrieben werden.

Die Erfindung ist nicht auf die dargestellten und beschriebenen Ausführungsbeispiele beschränkt, sondern umfasst auch alle im Sinne der Erfindung gleichwirkenden Ausführungen. Insbesondere ist in der dargestellten, bevorzugten Ausführungsform das Gehäuse 1 zur Aufputz-Montage (AP-Montage) auf einer Wandfläche konzipiert. Dazu wird das Gehäuse 1 in bekannter Art über geeignete Mittel - Fig. 1 zeigt diesbezüglich exemplarisch Montageöffnungen GB1, GB2, GB3, GB4 im Boden GB des Gehäuses 1 - auf der Wand befestigt, wobei Anschlussleitungen durch Montageöffnungen GA1, GA2 im Boden GB des Gehäuses 1 geführt werden können. Im Gegensatz zu dieser Ausführung könnte das erfindungsgemäße Gehäuse 1 aber auch, insbesondere mit unterseitig geschlossenem Boden GB, für eine Unterputz-Montage (UP-Montage) ausgelegt werden.

Ferner ist die Erfindung bislang auch noch nicht auf die im Anspruch 1 und den anderen unabhängigen Ansprüchen definierte Merkmalskombination beschränkt, sondern kann auch durch jede beliebige andere Kombination von bestimmten Merkmalen aller insgesamt offenbarten Einzelmerkmale definiert sein. Dies bedeutet, dass grundsätzlich praktisch jedes Einzelmerkmal der unabhängigen Ansprüche weggelassen bzw. durch mindestens ein an anderer Stelle der Anmeldung offenbartes Einzelmerkmal ersetzt werden kann. Insofern sind die Ansprüche 1 lediglich als ein erster Formulierungsversuch für eine Erfindung zu verstehen.

## Patentansprüche

1. Montagebaugruppe (MG), umfassend mindestens einerseits ein in der Grundgestalt quaderförmiges Gehäuse (1), welches jeweils in Ecken (GE1, GE2, GE3, GE4) zusammenstoßende Seitenwände (GW1, GW2, GW3, GW4) aufweist, wobei die Seitenwände (GW1, GW2, GW3, GW4) eine oberseitig offene Einsatzöffnung (GO) des Gehäuses (1) umgeben, und umfassend andererseits einen in der Grundgestalt rechteckigen, in die Einsatzöffnung (GO) des Gehäuses (1) einsetzbaren, und in dem Gehäuse (1) befestigbaren Modulträger (2) für Funktionseinheiten eines modularen Montagesystems, wie eines Systems zur Türkommunikation und Gebäudeelektroinstallation, wobei der Modulträger (2) ebenfalls jeweils in Ecken (TE1, TE2, TE3, TE4) zusammenstoßende Seitenwände (TW1, TW2, TW3, TW4) aufweist, die eine Trägerstruktur (TS) für die Funktionsmodule als Ränder umgeben,
**dadurch gekennzeichnet, dass** das Gehäuse (1) und der Modulträger (2) jeweils zwei längere Längs-Seitenwände (GW2, TW2, GW4, TW4) und zwei kürzere Quer-Seitenwände (GW1, TW1, GW3, TW3) aufweisen und das Gehäuse (1) im Bereich zweier benachbarter Ecken (GE1, GE2) seiner Seitenwände (GW1, GW2, GW3, GW4) oberseitig Vorsprünge (3) aufweist, die bei der Montage von Halteelementen (4) untergriffen werden, die im Bereich von zwei benachbarten Ecken (TE1, TE2) der Seitenwände (TW1, TW2, TW3, TW4) des Modulträgers (2) angeordnet sind und die zusammen mit den Halteelementen (4) und zusammen mit der zwischen den Halteelementen (4) liegenden Seitenwand (TW1) des Modulträgers (2) ein Gelenk bilden, um das der Modulträger (2) bei seiner Montage verschwenkbar ist, wobei sich die oberseitigen Vorsprünge (3) des Gehäuses (2) in zwei benachbarten Ecken (GE1, GE2) einer Quer-Seitenwand (GW1) befinden und eine Durchgangsbohrung (7) in der gegenüberliegenden Quer-Seitenwand (GW3) des Gehäuses (1) befindet, wobei der Modulträger (2) in einer Quer-Seitenwand (TW3) eine Aufnahmeöffnung (5) zum Eingriff einer Befestigungsschraube (6) aufweist, die die Durchgangsbohrung (7) durchgreift, welche sich in der neben der Seitenwand (TW3) des Modulträgers (2) liegenden Seitenwand (GW3) des Gehäuses (1) befindet.

2. Montagebaugruppe (MG) nach Anspruch 1,
**dadurch gekennzeichnet, dass** der Modulträger (2) an allen vier Ecken (TE1, TE2, TE3, TE4) die Halteelemente (4) aufweist.

3. Montagebaugruppe (MG) nach Anspruch 2,
**dadurch gekennzeichnet, dass** beide Quer-Seitenwände (TW1, TW3) die Aufnahmeöffnungen (5) zum Eingriff der Befestigungsschraube (6) aufweisen.

4. Montagebaugruppe (MG) nach einem der Ansprüche 1 bis 3,
**dadurch gekennzeichnet, dass** in der Trägerstruktur (TS) des Modulträgers (2) Aufnahmeöffnungen (TO) für die Funktionsmodule, angeordnet sind, wobei die Trägerstruktur (TS) eine Kodierung (K) aufweist, wodurch die Funktionsmodule verdrehsicher und ausschließlich in lage- und funktionsrichtiger Anordnung in den Modulträger (2) einsetzbar sind.

5. Montagebaugruppe (MG) nach Anspruch 4,
**dadurch gekennzeichnet, dass** die Kodierung derart ausgebildet ist, dass die Funktionsmodule in zwei verschiedenen, um 90° gegeneinander verdrehten Positionen lage- und funktionsrichtig in den Modulträger einsetzbar sind.

6. Montagebaugruppe (MG) nach einem der Ansprüche 1 bis 5,
**dadurch gekennzeichnet, dass** das Gehäuse (2) entlang seiner Seitenwände (GW1, GW2, GW3, GW4) eine umlaufende Nut (N) zur Aufnahme einer im Montagezustand unterseitig am Modulträger (1) anliegenden Dichtung (8) aufweist.

7. Montagebaugruppe (MG) nach einem der Ansprüche 1 bis 6,
**dadurch gekennzeichnet, dass** der Modulträger (1) an seinen Quer-Seitenwänden (TW1, TW3) außenseitig eine hervorstehende Kontur für die Quer-Seitenwände (GW1, GW2) des Gehäuses (2) aufweist.

8. Montagebaugruppe (MG) nach Anspruch 7,
**dadurch gekennzeichnet, dass** der Modulträger (1) an seinen Quer-Seitenwänden (TW1, TW3) jeweils zwei Anlagerippen (TR1, TR2, TR3, TR4), an jeder Quer-Seitenwand (TW1, TW3) für jeweils zwei korrespondierende Anlagerippen (GR1 und GR2, GR3 und GR4) der Quer-Seitenwände (GW1, GW2) des Gehäuses (2) aufweist.

9. Montagebaugruppe (MG) nach einem der Ansprüche 1 bis 8,
**dadurch gekennzeichnet, dass** die Aufnahmeöffnung (5), welche der Modulträger (2) zum Eingriff der Befestigungsschraube (6) aufweist, eine gewindelose, sich in Eintrittsrichtung der Schraube konisch verjüngende Öffnung ist.

10. Montagebaugruppe (MG) nach einem der Ansprüche 1 bis 9,
**dadurch gekennzeichnet, dass** die Befestigungsschraube (6) eine Stiftschraube ist und zur Zentrierung in der Aufnahmeöffnung (5) des Modulträgers (2) einendig eine flache und/oder verrundete konisch ausgebildete Spitze (6S) sowie anderendig einen nicht genormten Innenangriff für ein Schraubendreh-Werkzeug aufweist.

11. Montagebaugruppe (MG) nach einem der Ansprüche 1 bis 10,
**dadurch gekennzeichnet, dass** die Befestigungsschraube (6) in dem Gehäuse (2) vormontiert und gegen ein Herausschrauben gesichert ist.

12. Montagebaugruppe (MG) nach einem der Ansprüche 1 bis 11,
**gekennzeichnet durch** eine einendig am Gehäuse (1) und anderendig am Modulträger (2) befestigbare Halteschnur (9), an deren Enden Befestigungselemente (9B) angebracht sind, wobei die Befestigungselemente (9B) über jeweils eine in das Gehäuse (1) und in den Modulträger (2) eindrehbare Kopfschraube (10) am Gehäuse (1) und am Modulträger (2) befestigbar sind.

13. Montagebaugruppe (MG) nach Anspruch 12,
**dadurch gekennzeichnet, dass** die Befestigungselemente (9B) als Schlüsselloch-Scheiben angecrimpt sind, wobei die Befestigungselemente (9B) über jeweils eine in das Gehäuse (1) und in den Modulträger (2) eindrehbare Kopfschraube (10) am Gehäuse (1) und am Modulträger (2) befestigbar sind.

14. Montagebaugruppe (MG) nach Anspruch 12 oder 13,
**dadurch gekennzeichnet, dass** die Halteschnur am Gehäuse (1) und/oder am Modulträger (2) vormontiert ist.

15. Montagewerkzeug (MW) zur Montage einer Befestigungsschraube (6) in einer Montagebaugruppe (MG) nach einem der Ansprüche 1 bis 14, mit einem Griff (MW1), einem flexiblen Schaft (MW2) und einem Kopf (MW3), in dem eine Aufnahme (MWA) für ein Werkzeug-Bit (10a) ausgebildet ist, **dadurch gekennzeichnet, dass** der Griff (MW1), der Schaft (MW2) und der Kopf (MW3) einstückig aus einem Kunststoff hergestellt sind, wobei der Schaft (MW2) ein Torsionswiderstandsmoment aufweist, welches konstruktiv durch die Dimensionierung der Größe eines Kern-Durchmessers des Schaftes (MW2) und durch auf dem Umfang des Schaftes (MW2) vorgesehene Längs- und/oder Querrippen (MWR) eingestellt wird, wobei das Torsionswiderstandsmoment kleiner ist als ein vorbestimmtes Grenz-Drehmoment.

16. Montagewerkzeug (MW) nach Anspruch 15,
**dadurch gekennzeichnet, dass** die Aufnahme (MWA) für das Werkzeug-Bit (10a) eine Klemmgeometrie (MWG) aufweist, durch die das Werkzeug-Bit (10a) nach einem Einstecken in die Aufnahme (MWA) im Kopf (MW3) gehalten ist, so dass ein Herausfallen des Werkzeug-Bits (10a) aus der Aufnahme (MWA) verhindert wird.

17. Montagewerkzeug (MW) nach Anspruch 15 oder 16,
**dadurch gekennzeichnet, dass** der Schaft (MW2) ein Torsionswiderstandsmoment aufweist, welches kleiner ist als das vorbestimmte Grenz-Drehmoment, welches in der Aufnahme (MWA) für das Werkzeug-Bit (10a) und/oder an der Wirkungsstelle des Werkzeug-Bits (10a) an einer/der Befestigungsschraube (6) und/oder am Modulträger (2) zu einer Zerstörung führt.

18. Montagewerkzeug (MW) nach einem der Ansprüche 14 bis 17,
**dadurch gekennzeichnet, dass** das Torsionswiderstandsmoment nicht größer ist als 1 Nm.

19. Montageset (MS) zum Aufbau eines modularen Montagesystems, wie eines Systems zur Türkommunikation und Gebäudeelektroinstallation, umfassend eine Montagebaugruppe (MG) nach einem der Ansprüche 1 bis 14 und ein Montagewerkzeug (MW) nach einem der Ansprüche 15 bis 18.

## Claims

1. Mounting assembly (MG) comprising at least for the one part a housing (1) of cuboid basic shape that has side walls (GW1, GW2, GW3, GW4) that abut in each case at corners (GE1, GE2, GE3, GE4), wherein the side walls (GW1, GW2, GW3, GW4) surround an upwardly open insertion opening (GO) of the housing (1), and comprising for the other part a module carrier (2) of rectangular basic shape for functional units of a modular mounting system, such as a system for door communication and building electrical installation, said module carrier (2) being insertable into the insertion opening (GO) of the housing (1) and fastenable in the housing (1), wherein the module carrier (2) likewise has side walls (TW1, TW2, TW3, TW4) that abut in each case at corners (TE1, TE2, TE3, TE4) and surround a carrier structure (TS) for the functional modules as edges,
**characterized in that** the housing (1) and the module carrier (2) each have two longer longitudinal side walls (GW2, TW2, GW4, TW4) and two shorter transverse side walls (GW1, TW1, GW3, TW3) and the housing (1) has protrusions (3) on its top side in the region of two adjacent corners (GE1, GE2) of its side walls (GW1, GW2, GW3, GW4), retaining elements (4) engaging under said protrusions during mounting, said protrusions being arranged in the region of two adjacent corners (TE1, TE2) of the side walls (TW1, TW2, TW3, TW4) of the module carrier (2) and forming a joint together with the retaining elements (4) and together with the side wall (TW1), located between the retaining elements (4), of the module carrier (2), the module carrier (2) being pivotable about said joint when it is mounted, wherein the top-side protrusions (3) of the housing (2) are located in two adjacent corners (GE1, GE2) of a transverse side wall (GW1) and a through-bore (7) is located in the opposite transverse side wall (GW3) of the housing (1), wherein the module carrier (2) has, in one transverse side wall (TW3), a receiving opening (5) for the engagement of a fastening screw (6) that passes through the through-bore (7) located in the side wall (GW3) of the housing (1) that is located next to the side wall (TW3) of the module carrier (2) .

2. Mounting assembly (MG) according to Claim 1,
**characterized in that** the module carrier (2) has the retaining elements (4) at all four corners (TE1, TE2, TE3, TE4).

3. Mounting assembly (MG) according to Claim 2,
**characterized in that** both transverse side walls (TW1, TW3) have the receiving openings (5) for the engagement of the fastening screw (6).

4. Mounting assembly (MG) according to one of Claims 1 to 3,
**characterized in that** receiving openings (TO) for the functional modules are arranged in the carrier structure (TS) of the module carrier (2), wherein the carrier structure (TS) has a coding (K) with the result that the functional modules are insertable into the module carrier (2) in a rotationally secure manner and exclusively in a positionally and functionally correct arrangement.

5. Mounting assembly (MG) according to Claim 4,
**characterized in that** the coding is configured such that the functional modules are insertable into the module carrier in a positionally and functionally correct manner in two different positions rotated through 90° with respect to one another.

6. Mounting assembly (MG) according to one of Claims 1 to 5, **characterized in that** the housing (2) has, along its side walls (GW1, GW2, GW3, GW4), an encircling groove (N) for receiving a seal (8) that bears against the underside of the module carrier (1) in the mounted state.

7. Mounting assembly (MG) according to one of Claims 1 to 6,
**characterized in that** the module carrier (1) has, on the outside of its transverse side walls (TW1, TW3), a protruding contour for the transverse side walls (GW1, GW2) of the housing (2).

8. Mounting assembly (MG) according to Claim 7,
**characterized in that** the module carrier (1) has, on its transverse side walls (TW1, TW3), in each case two contact ribs (TR1, TR2, TR3, TR4) on each transverse side wall (TW1, TW3) for in each case two corresponding contact ribs (GR1 and GR2, GR3 and GR4) of the transverse side walls (GW1, GW2) of the housing (2).

9. Mounting assembly (MG) according to one of Claims 1 to 8,
**characterized in that** the receiving opening (5) that the module carrier (2) has for the engagement of the fastening screw (6) is a threadless opening that narrows conically in the introduction direction of the screw.

10. Mounting assembly (MG) according to one of Claims 1 to 9,
**characterized in that** the fastening screw (6) is a stud screw and, for centring in the receiving opening (5) of the module carrier (2), has a flat and/or rounded conically formed tip (6S) at one end and a non-standardized socket for a screwdriver tool at the other end.

11. Mounting assembly (MG) according to one of Claims 1 to 10,
**characterized in that** the fastening screw (6) is pre-mounted in the housing (2) and secured against being screwed out.

12. Mounting assembly (MG) according to one of Claims 1 to 11,
**characterized by** a retaining cord (9) which is able to be fastened to the housing (1) at one end and to the module carrier (2) at the other end and at the ends of which fastening elements (9B) are attached, wherein the fastening elements (9B) are able to be fastened to the housing (1) and to the module carrier (2) via respective cap screws (10) that are able to be screwed into the housing (1) and into the module carrier (2).

13. Mounting assembly (MG) according to Claim 12,
**characterized in that** the fastening elements (9B) are crimped on as keyhole discs, wherein the fastening elements (9B) are able to be fastened to the housing (1) and to the module carrier (2) via respective cap screws (10) that are able to be screwed into the housing (1) and into the module carrier (2).

14. Mounting assembly (MG) according to Claim 12 or 13,
**characterized in that** the retaining cord is pre-mounted on the housing (1) and/or on the module carrier (2).

15. Mounting tool (MW) for mounting a fastening screw (6) in a mounting assembly (MG) according to one of Claims 1 to 14, having a handle (MW1), a flexible shank (MW2) and a head (MW3), in which a receptacle (MWA) for a tool bit (10a) is formed, **characterized in that** the handle (MW1), the shank (MW2) and the head (MW3) are produced integrally from a plastic, wherein the shank (MW2) has a torsional resistance moment that is set in terms of design by the dimensioning of the size of a core diameter of the shank (MW2) and by longitudinal and/or transverse ribs (MWR) provided on the circumference of the shank (MW2), wherein the torsional resistance moment is lower than a predetermined limit torque.

16. Mounting tool (MW) according to Claim 15,
**characterized in that** the receptacle (MWA) for the tool bit (10a) has a clamping geometry (MWG) by which the tool bit (10a) is retained in the head (MW3) after being introduced into the receptacle (MWA), such that the tool bit (10a) is prevented from falling out of the receptacle (MWA).

17. Mounting tool (MW) according to Claim 15 or 16,
**characterized in that** the shank (MW2) has a torsional resistance moment that is lower than the predetermined limit torque, which results in destruction in the receptacle (MWA) for the tool bit (10a) and/or at the point of action of the tool bit (10a) on a/the fastening screw (6) and/or on the module carrier (2).

18. Mounting tool (MW) according to one of Claims 14 to 17,
**characterized in that** the torsional resistance moment is no greater than 1 Nm.

19. Mounting set (MS) for constructing a module mounting system, such as a system for door communication and building electrical installation, comprising a mounting assembly (MG) according to one of Claims 1 to 14 and a mounting tool (MW) according to one of Claims 15 to 18.

## Revendications

1. Module de montage (MG), comportant au moins d'une part un boîtier (1) parallélépipédique dans la configuration de base, lequel comprend des parois latérales (GW1, GW2, GW3, GW4) aboutées respectivement aux coins (GE1, GE2, GE3, GE4), dans lequel les paroles latérales (GW1, GW2, GW3, GW4) entourent une ouverture d'insertion (GO), ouverte vers le haut, du boîtier (1), et comportant d'autre part un support de modules (2) pour des unités fonctionnelles d'un système de montage modulaire tel qu'un système pour la communication de porte et l'installation électrique de bâtiment, lequel support de modules est rectangulaire dans la configuration de base, peut être inséré dans l'ouverture d'insertion (GO) du boîtier (1) et peut être fixé dans le boîtier (1), dans lequel le support de modules (2) comprend également des parois latérales (TW1, TW2, TW3, TW4) aboutées respectivement aux coins (TE1, TE2, TE3, TE4), lesquelles entourent comme des bords une structure de support (TS) pour les modules fonctionnels, **caractérisé en ce que** le boîtier (1) et le support de modules (2) comprennent respectivement deux parois latérales longitudinales plus longues (GW2, TW2, GW4, TW4) et deux parois latérales transversales plus courtes (GW1, TW1, GW3, TW3) et le boîtier (1) comprend, dans la région de deux coins adjacents (GE1, GE2) de ses parois latérales (GW1, GW2, GW3, GW4), des saillies supérieures (3) avec lesquelles des éléments de retenue (4) viennent en prise par le dessous lors du montage, lesquelles sont disposées dans la région de deux coins adjacents (TE1, TE2) des parois latérales (TW1, TW2, TW3, TW4) du support de modules (2) et lesquelles forment une articulation conjointement avec les éléments de retenue (4) et conjointement avec la paroi latérale (TW1), située entre les éléments de retenue (4), du support de modules (2), articulation autour de laquelle le support de modules (2) peut pivoter lors de son montage, les saillies supérieures (3) du boîtier (2) se trouvant dans deux coins adjacents (GE1, GE2) d'une paroi latérale transversale (GW1) et un alésage traversant (7) se trouvant dans la paroi latérale transversale opposée (GW3) du boîtier (1), le support de modules (2) comprenant, dans une paroi latérale transversale (TW3), une ouverture de réception (5) pour l'entrée en prise d'une vis de fixation (6) qui vient en prise à travers l'alésage traversant (7) qui se trouve dans la paroi latérale (GW3) du boîtier (1) située près de la paroi latérale (TW3) du support de modules (2) .

2. Module de montage (MG) selon la revendication 1, **caractérisé en ce que** le support de modules (2) comprend les éléments de retenue (4) aux quatre coins (TE1, TE2, TE3, TE4).

3. Module de montage (MG) selon la revendication 2, **caractérisé en ce que** les deux parois latérales transversales (TW1, TW3) comprennent les ouvertures de réception (5) pour l'entrée en prise de la vis de fixation (6).

4. Module de montage (MG) selon l'une des revendications 1 à 3,
**caractérisé en ce que** des ouvertures de réception (TO) pour les modules fonctionnels sont disposées dans la structure de support (TS) du support de modules (2), la structure de support (TS) comprenant un codage (K), de sorte que les modules fonctionnels peuvent être insérés dans le support de modules (2) de manière bloquée en rotation et exclusivement suivant un agencement correct en termes de position et de fonction.

5. Module de montage (MG) selon la revendication 4, **caractérisé en ce que** le codage est réalisé de telle sorte que les modules fonctionnels peuvent être insérés dans le support de modules de manière correcte en termes de position et de fonction dans deux positions différentes tournées de 90° l'une par rapport à l'autre.

6. Module de montage (MG) selon l'une des revendications 1 à 5,
**caractérisé en ce que** le boîtier (2) comprend, le long de ses parois latérales (GW1, GW2, GW3, GW4), une rainure périphérique (N) destinée à la réception d'un joint d'étanchéité (8) s'appuyant contre le support de modules (1) du côté inférieur dans l'état monté.

7. Module de montage (MG) selon l'une des revendications 1 à 6,
**caractérisé en ce que** le support de modules (1) comprend, sur ses parois latérales transversales (TW1, TW3), du côté extérieur, un contour saillant pour les parois latérales transversales (GW1, GW2) du boîtier (2) .

8. Module de montage (MG) selon la revendication 7, **caractérisé en ce que** le support de modules (1) comprend, sur ses parois latérales transversales (TW1, TW3), respectivement deux nervures d'appui (TR1, TR2, TR3, TR4), sur chaque paroi latérale transversale (TW1, TW3) pour respectivement deux nervures d'appui correspondantes (GR1 et GR2, GR3 et GR4) des parois latérales transversales (GW1, GW2) du boîtier (2) .

9. Module de montage (MG) selon l'une des revendications 1 à 8,
**caractérisé en ce que** l'ouverture de réception (5), que comprend le support de modules (2) pour l'entrée en prise de la vis de fixation (6), est une ouverture non filetée se rétrécissant de manière conique dans le sens d'introduction de la vis.

10. Module de montage (MG) selon l'une des revendications 1 à 9,
**caractérisé en ce que** la vis de fixation (6) est un boulon fileté et comprend, pour le centrage dans l'ouverture de réception (5) du support de modules (2), à une extrémité, une pointe (6S) aplatie et/ou de forme conique arrondie et, à l'autre extrémité, une empreinte non standardisée pour un outil tournevis.

11. Module de montage (MG) selon l'une des revendications 1 à 10,
**caractérisé en ce que** la vis de fixation (6) est prémontée dans le boîtier (2) et est fixée de manière à empêcher un dévissage.

12. Module de montage (MG) selon l'une des revendications 1 à 11,
**caractérisé par** une attache de retenue (9) pouvant être fixée, à une extrémité, au boîtier (1) et, à l'autre extrémité, au support de modules (2), attache aux extrémités de laquelle des éléments de fixation (9B) sont fixés, les éléments de fixation (9B) pouvant être fixés au boîtier (1) et au support de modules (2) respectivement par le biais d'une vis à tête (10) pouvant être vissée dans le boîtier (1) et dans le support de modules (2).

13. Module de montage (MG) selon la revendication 12, **caractérisé en ce que** les éléments de fixation (9B) sont sertis en tant que disques en forme de trous de serrure, les éléments de fixation (9B) pouvant être fixés au boîtier (1) et au support de modules (2) respectivement par le biais d'une vis à tête (10) pouvant être vissée dans le boîtier (1) et dans le support de modules (2).

14. Module de montage (MG) selon la revendication 12 ou 13,
**caractérisé en ce que** l'attache de retenue est prémontée sur le boîtier (1) et/ou sur le support de modules (2) .

15. Outil de montage (MW) pour le montage d'une vis de fixation (6) dans un module de montage (MG) selon l'une des revendications 1 à 14, comprenant une poignée (MW1), une tige flexible (MW2) et une tête (MW3), dans laquelle est formé un logement (MWA) pour un embout d'outil (10a), **caractérisé en ce que** la poignée (MW1), la tige (MW2) et la tête (MW3) sont fabriquées d'une seule pièce à partir d'une matière synthétique, la tige (MW2) présentant un couple de résistance à la torsion qui est réglé structuralement par le dimensionnement de la taille d'un diamètre de noyau de la tige (MW2) et par des nervures longitudinales et/ou transversales (MWR) prévues sur la périphérie de la tige (MW2), le couple de résistance à la torsion étant inférieur à un couple limite prédéfini.

16. Outil de montage (MW) selon la revendication 15, **caractérisé en ce que** le logement (MWA) pour l'embout d'outil (10a) présente une géométrie de serrage (MWG) au moyen de laquelle l'embout d'outil (10a) est retenu dans la tête (MW3) après l'enfichage dans le logement (MWA), de manière à empêcher une sortie de l'embout d'outil (10a) hors du logement (MWA).

17. Outil de montage (MW) selon la revendication 15 ou 16,
**caractérisé en ce que** la tige (MW2) présente un couple de résistance à la torsion qui est inférieur au couple limite prédéfini qui mène à une destruction dans le logement (MWA) pour l'embout d'outil (10a) et/ou au point d'action de l'embout d'outil (10a) sur une/la vis de fixation (6) et/ou sur le support de modules (2).

18. Outil de montage (MW) selon l'une des revendications 14 à 17, **caractérisé en ce que** le couple de résistance à la torsion n'est pas supérieur à 1 Nm.

19. Jeu de montage (MS) pour la construction d'un système de montage modulaire, tel qu'un système pour la communication de porte et l'installation électrique de bâtiment, comportant un module de montage (MG) selon l'une des revendications 1 à 14 et un outil de montage (MW) selon l'une des revendications 15 à 18.
